# EUROPEAN PATENT SPECIFICATION

(11) **EP 3 942 935 B1**
(45) Date of publication and mention of the grant of the patent: **19.02.2025**
(21) Application number: 20382669.8
(22) Date of filing: 24.07.2020
(51) Int. Cl.: F22B 1/28, A21B 3/04, F24C 15/32, F22G 1/16

(54) **STEAM GENERATION SYSTEM FOR A STEAM COOKING APPLIANCE**
DAMPFERZEUGUNGSSYSTEM FÜR EIN DAMPFGARGERÄT
SYSTÈME DE PRODUCTION DE VAPEUR POUR APPAREIL DE CUISSON À LA VAPEUR

(43) Date of publication of application: 26.01.2022
(73) Proprietor: EIKA, S.COOP., 48277 Etxebarria (ES)
(72) Inventor: DE LOS TOYOS LÓPEZ, Daniel, 20600 EIBAR (Gipuzkoa) (ES); BAZTAN ESPARZA, Jesus Javier, 01007 VITORIA - GASTEIZ (ES)
(74) Representative: Igartua, Ismael

(56) References cited:
- EP-A1- 1 729 065
- WO-A1-2019/086641
- WO-A1-2019/167488
- CN-A- 106 989 378
- DE-C- 461 689
- JP-A- 2004 251 511
- JP-A- H1 189 722
- KR-A- 20180 089 344
- KR-B1- 102 069 210
- US-A1- 2017 010 005

## Description

### TECHNICAL FIELD

The present invention relates to a steam generation system adapted to a cooking appliance configured for steaming, to a cooking appliance comprising the steam generation system, and to an operating method for the cooking appliance.

### PRIOR ART

Cooking appliances, particularly ovens, configured for steaming, for which said appliances heat up steam generated in a first steam generator device, obtaining superheated steam which they introduce into the cooking chamber of the oven, are known.

In that sense, US 2016/0061490 A1 discloses a cooking appliance comprising a cooking chamber, a steam generator configured for injecting steam into the cooking chamber, a convection heater arranged in the cooking chamber heating the steam discharged from the steam generator, said steam being sprayed in a superheated steam state into the cooking chamber.

US 2017/0010005 A1 discloses an oven comprising a steam generator device connected to a water reservoir, a device for generating superheated steam from the steam generated in the steam generator, a fan driving the superheated steam towards the upper part of the oven and introducing it into the cooking chamber of the oven, and a device for discharging the superheated steam inside the cooking chamber.

JP H1189722 A discloses a superheat saturated steam generation method for pressure cooking involving mixing saturated superheated steam to dry air or water sprayed during cooking. The apparatus comprises a working chamber with inlets and an exit, a steam generator, and a steam superheater 5 which arranges in a row to the working chamber and to the steam generator 10. The working chamber comprises a pressure sensor, a flow sensor, an humidity sensor and the temperature sensor and regulators which acts in response to each sensor.

WO 2019/167488 A1 discloses a superheated steam generator including a pipe though which steam passes, a heat exchange unit disposed inside the pipe, a heater arranged outside the pipe, substantially parallel to the pipe and a heat transfer unit arranged between the pipe and the heater. The heat form heater heats the pipe through the heat transfer unit and the steam passing through the pipe comes in contact with the pipe to overheat the steam.

JP 2004251511 A discloses a high frequency heat cooking device comprising a first steam generating means, a second steam generating means, a high frequency heating means, and control means.

KR 102069210 A1 discloses a continuous cooking apparatus which produces a large amount of water by supplying steam while at the same time spraying water along the conveyor. The apparatus comprises injectors configured to inject water at a temperature between 30 and 90°C, this temperature cannot be higher because otherwise, the hot water would evaporate before it contacts the rice so that the rice would run out of water which would lead to a deterioration in taste. The apparatus further comprises an injection device that injects saturated or supersaturated steam into the lower part of the cooking chamber to heat the rice. The injection device includes injection ducts (and a plurality of injectors. The apparatus further comprises a steam supply device comprising a steam generation tank and a superheater for generating saturated steam from the steam generated in the tank, thus selectively supplying the injection device with saturated steam generated in the tank or superheated steam generated in the superheater.

KR 20180089344 A discloses a cooking apparatus which injects superheated steam into the cooking cavity. The cooking cavity houses a superheated steam generating device connected to a heating device such that the heating device provides steam to the superheated steam generating device. The superheated steam is injected into the food through supply ducts connected to the steam generator and arranged at the top and at the bottom of the cooking chamber.

CN 106989378 A discloses a steam heating apparatus comprising the features of the preamble of claim 1.

### DISCLOSURE OF THE INVENTION

The object of the invention is to provide a steam generation system adapted to a cooking appliance configured for steaming, a cooking appliance comprising the steam generation system, and an operating method for the cooking appliance comprising the steam generation system, as defined in the claims.

One aspect of the invention relates to a steam generation system adapted to a cooking appliance, the cooking appliance comprising a cooking chamber comprising at least one steam injection point. The steam generation system comprises a water reservoir, a steam generator communicated with the water reservoir and configured for heating water from the water housed in the water reservoir, and a two-phase generator device connectable to the corresponding steam injection point. The two-phase generator device is communicated with the steam generator and configured for generating superheated steam and injecting it into the cooking chamber through the corresponding steam injection point, from the hot water or steam generated in the steam generator.

One of the advantages of the invention is that the steam generation system is more energy efficient with respect to other solutions known in the state of the art, since the fluid arriving at the two-phase generator device reaches a high temperature such that steam is obtained at temperatures which allow directly cooking foods with less energy. Superheated steam generation and injection take place in the same device, i.e., in the two-phase generator device, and furthermore the cooking appliance is simplified and optimized at the injection point of the cooking chamber. Furthermore, by arranging one two-phase generator device at each injection point, each injection point is made independent in terms of maintenance, malfunctions, etc., where the corresponding two-phase generator device can be readily replaceable. The obtained two-phase generator device is a compact and simplified device.

One of the biggest problems that steam generation systems known in the state of the art encounter arises from the accumulations of dry residues existing in the water which damage said steam generation systems, rendering them useless. The dry residues, which can be sludge with metal particles, lime, etc., settle mainly in the recesses of the injectors. The combination of the steam generator and the two-phase generator device allows most of the dry residues existing in the water to remain in the steam generator, such that the fluid arriving at the two-phase generator device is much cleaner. Harmful substances that may reach the food through the two-phase generator device are minimized and lime generation in said two-phase generator device is minimized, prolonging the service life thereof.

Another aspect of the invention relates to a cooking appliance comprising the cooking chamber including at least one steam injection point through which steam is injected into the cooking chamber, and the steam generation system communicated with the steam injection point.

Another aspect of the invention relates to an operating method for the cooking appliance comprising the steam generation system, the method comprising at least one steaming operating mode comprising a first rapid heating phase, in which the two-phase generator device operates at least at about 20% of its maximum heating capacity and the steam generator operates at least at about 50% of its maximum heating capacity until a setpoint temperature is reached in the cooking chamber, and a second stationary phase which starts when the setpoint temperature is reached in the cooking chamber, in which the steam generator operates at least at about 20% of its maximum heating capacity, and the two-phase generator device operates at least at about 25% of its maximum capacity and injects superheated steam into the cooking chamber.

Heating capacity of the two-phase generator device and/or of the steam generator is understood to be the electrical energy introduced into the two-phase device and/or into the steam generator (i.e., electric power) minus the thermal losses produced in both devices, said thermal losses being dynamic over time.

The operating method allows operating the steam generation system in an energy efficient manner. Moreover, when cooking with the second operating mode, food can be cooked directly with the superheated steam such that it maintains the organoleptic properties of the food and prevents it from drying up. Furthermore, it reduces the energy contribution of the grill and floor resistors of the oven itself, such that said resistors would not be responsible for cooking the food, rather their energy contribution would be minimal, so as to prevent rapid condensation of the superheated steam.

Furthermore, the operating method allows the fluid arriving at the two-phase generator device to be much cleaner. Harmful substances that may reach the food through the two-phase generator device are minimized and lime generation and/or solid residue deposition in said two-phase generator device is minimized, prolonging the service life thereof.

These and other advantages and features of the invention will become evident in view of the drawings and detailed description of the invention.

### DESCRIPTION OF THE DRAWINGS

Figure 1 shows a schematic view of a cooking appliance comprising a steam generation system according to an embodiment of the invention.
Figure 2 shows a sectioned view of a steam generator comprised in the steam generation system shown in Figure 1.
Figure 3 shows a longitudinal section of a two-phase generator device comprised in the steam generation system shown in Figure 1.
Figure 4 shows another longitudinal section of the two-phase generator device shown in detail in Figure 3.

### DETAILED DISCLOSURE OF THE INVENTION

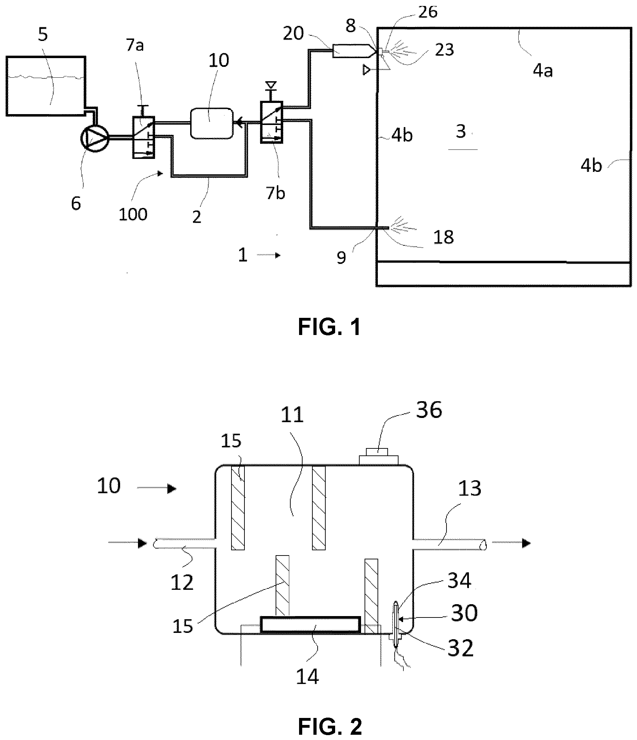

Figure 1 schematically shows a cooking appliance 1 configured for steaming, comprising a cooking chamber 3 with at least one injection point 8, a water reservoir 5, and a steam generation system 100 according to the invention.

The steam generation system 100 according to the invention comprises a steam generator 10 communicated with the water reservoir 5 and configured for heating the water of the reservoir 5, and at least one two-phase generator device 20 at the corresponding injection point 8, the two-phase generator device 20 being communicated with the steam generator 10 and configured for generating superheated steam from the water leaving the steam generator 10 and for injecting said superheated steam into the cooking chamber 3.

The steam generator 10, schematically depicted in Figure 1, is configured for heating the water of the reservoir 5 preferably to a temperature of between about 85°C and 110°C, preferably between 95°C and 100°C, i.e., the water leaves the steam generator 10 in the form of steam or in liquid state at a very high temperature, close to the evaporation temperature. When reference is made throughout the description and claims to the water or fluid leaving the steam generator 10 or to the water or fluid entering the two-phase generator device 20, it must be understood that said water or fluid is either steam or water at a very high temperature close to the evaporation temperature.

The two-phase generator device 20 is configured for heating the water which has previously passed through the steam generator 10 and can be in liquid or gaseous state, as explained above, preferably to a temperature of between about 120°C to about 140°C, generating superheated steam.

The cooking appliance 1 schematically shown in Figure 1 comprises an injection point 8, the two-phase generator device 20 being arranged such that it is connected directly to said injection point 8. In other non-depicted embodiments, the cooking appliance 1 comprises a plurality of injection points 8 and the steam generator system 100 comprises a plurality of two-phase generator devices 20, each two-phase generator device 20 being arranged such that it is connected directly to the corresponding injection point 8. The injection points 8 where the two-phase generator devices 20 are connected are arranged in the central and/or lower part of side walls 4b of the cooking chamber 3 and/or of a ceiling 4a of said cooking chamber 3.

Each two-phase generator device 20 is removable, i.e., can be readily extracted and interchanged from the steam generation system 100 and from the cooking chamber 3. Should maintenance, repair, and/or replacement be necessary, the two-phase generator device 20 as a whole can be extracted and replaced in a rapid and simple manner without affecting the rest of the installation.

Each two-phase generator device 20 comprises heating means 21 configured for heating the inflow water generating superheated steam, and an injector 23 configured for injecting the superheated steam into the cooking chamber 3 through the corresponding injection point 8. Each two-phase generator device 20 is arranged such that it is housed mainly on the outside of the cooking chamber 3, the injector 23 being arranged such that it is housed at least partially inside the cooking chamber 3.

The heating means 21 of the two-phase generator device 20 preferably comprise at least one resistive element. In an embodiment of the invention, the resistive element is manufactured by means of deposition, silk-screen printing, or functional active ink injection technologies. In the embodiment shown in the figures, the resistive element is a thick-film resistor. In other embodiments, the resistive element could be a tubular resistive element.

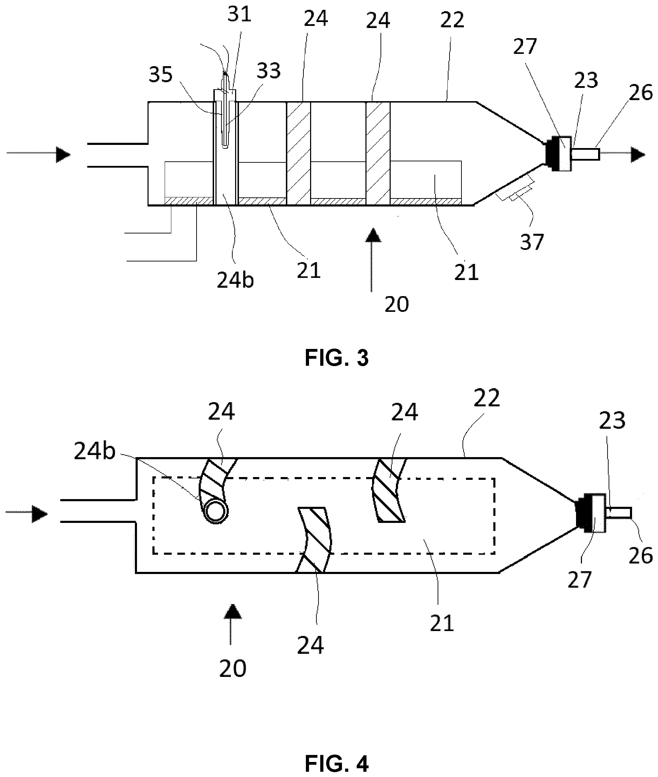

The two-phase generator device 20, shown in detail in Figures 3 and 4, comprises a body 22 in which the heating means 21 are housed, the body 22 including at least one deflector 24 configured for diverting inflow water in the two-phase generator device 20. The heat transfer from the heating means to the water going through the two-phase generator device 20 is therefore much more effective.

In an embodiment of the invention shown in Figures 3 and 4, each two-phase generator device 20 comprises a plurality of deflectors 24 arranged configuring a labyrinthine path for the water throughout the two-phase generator device 20.

In a preferred embodiment of the invention, the heating means 21 are arranged such that they are fixed inside the body 22, as shown in Figure 3. In other embodiments, the heating means can be arranged on the deflectors 24.

In a preferred embodiment of the invention, the body 22 of the two-phase generator device 20 has a substantially cylindrical geometry, as shown in Figures 3 and 4. In another embodiment according to the invention not shown in the figures, the body 22 has a substantially prismatic geometry.

Moreover, in one of the embodiments, the injector 23 of the two-phase generator device 20 can be orientable. In particular, the injector 23 of the two-phase generator device 20 can be arranged oriented towards the center of the cooking chamber 3 or towards the fan blades (not depicted in the figures) housed inside the cooking chamber 3 such that a homogenous distribution of the injected fluid takes place. To that end, the control means of the cooking appliance 1 control the speed of the fan such that it operates at speeds compatible with superheated steam injection. In another embodiment, the injector 23 of the two-phase generator device 20 can be arranged such that it is oriented towards the center of the cooking chamber 3.

The injector 23 comprises a nozzle 27 coupled to the body 22, and a silicone conduit 26 coupled to the nozzle 27, the conduit 26 going through the cooking chamber 3 through the corresponding injection point 8. The conduit 26 is arranged such that it is housed inside the cooking chamber 3. The conduit 26 is coupled to the nozzle 27 preferably through an element made of a material with shape memory. This element, not depicted in the figures, is configured for being elongated when a given temperature is reached, causing the conduit 26 to rotate or bend with respect to the nozzle 27, being oriented with respect to same, recovering its initial position when the temperature drops below the given temperature again. The objective is to orient the injection of supersaturated steam towards the food located in the cooking chamber 3.

Moreover, the steam generator 10, shown in detail in Figure 2, comprises a body 11 with a water inlet 12 and an outlet 13, and heating means 14 housed inside the body 11 configured for rapidly heating the inflow water until reaching a temperature of between about 85°C and 110°C, preferably between about 95°C and about 100°C. The steam generator 10 is not a water accumulator as such, but it does house a minimum of water so as to generate steam, given that the generation of steam in said steam generator 10 is not instantaneous. That is, the water of the reservoir 5 is driven towards the steam generator 10 where it is housed until it is heated through the heating means 14 and leaves, converted to steam or very hot water at a temperature between about 85°C and about 110°C, to go into the cooking chamber 3 or towards the two-phase generator device 20. In the two-phase generator device 20 the fluid does not accumulate, as it enters the device it leaves converted to superheated steam without steam accumulating therein.

The heating means 14 of the steam generator 10 comprise at least one resistive element. In a preferred embodiment, the resistive element is manufactured by means of deposition, silk-screen printing, or functional active ink injection technologies. In a preferred embodiment, the resistive element is a thick-film resistor. In other embodiments according to the invention not shown in the figures, the resistive element can be tubular.

The heating means 14 of the steam generator 10 have an electric power greater than the heating means 21 of the two-phase generator device 20. In an embodiment of the invention, the electric power of the steam generator 10 is in the order of about three times the electric power of the two-phase generator device 20. In a preferred embodiment, the electric power of the two-phase generator device 20 is between about 350 W and about 550 W, and the electric power of the steam generator 10 is between about 1300 W and 1500 W.

The steam generator 10 shown in detail in Figure 2 comprises a plurality of deflectors 15 inside the body 11 which are arranged configuring a labyrinthine path for the water through the steam generator 10. The heat transfer from the heating means 14 to the water going through the steam generator 10 is therefore much more effective. In other embodiments, the steam generator 10 may not include deflectors.

In the embodiment shown in the figures, the heating means 14 are arranged such that they are fixed on the inside the body 11. In other embodiments not shown in the figures, the heating means 14 are arranged on the corresponding deflector 15.

In a preferred embodiment, the body 11 of the steam generator 10 has a substantially cylindrical geometry, as in the case of the embodiment of Figure 2. In another embodiment, the body 11 has a substantially prismatic geometry.

In another non-depicted embodiment of the invention, the steam generator comprises a conduit connected with the inlet and with the outlet of the steam generator, housed inside the body and arranged on the heating means, such that the water circulates through said conduit being heated by the heating means. In a preferred embodiment, the conduit may define a spiral path.

Moreover, the steam generation system 100 preferably further comprises drive means 6 configured for driving the water towards the steam generator 10. In the embodiment shown in the figures, the drive means 6 comprise a pump arranged between the water reservoir 5 and the steam generator 10.

In a preferred embodiment of the invention, the steam generator 10 is communicated with the two-phase generator device 20 by gravity. The drive means 6, the water reservoir 5, and the steam generator 10 are therefore arranged in the upper part of the cooking appliance 1.

Furthermore, the steam generation system 100 according to the invention comprises regulating means 7a and 7b arranged between the steam generator 10 and the two-phase generator device 20. In the embodiment shown in the figures, the regulating means 7a and 7b comprise a double solenoid valve 7a between the drive means 6 and the generator device 10 and another double solenoid valve 7b at the outlet of the steam generator device 10.

Furthermore, the steam generation system 100 comprises a conduit 2 configured for communicating the drive means 6 with the two-phase generator device 20 bypassing the steam generator 10. In particular, the conduit 2 would directly communicate the two solenoid valves 7a and 7b with one another. This bypassing of the steam generator 10 allows superheated steam generated directly in the two-phase generator device 20 to be supplied directly at a given time without previously passing though the steam generator 10. A very small flow rate of superheated steam is supplied in the cooking chamber 3.

The steam generation system 100 also preferably comprises secondary injectors 18 in the cooking chamber 3 configured for being able to introduce the fluid leaving the steam generator 10 directly into the cooking chamber 3. The secondary injectors 18 are arranged such that they are connected to secondary injection points 9 comprised in the cooking chamber 3. Said secondary injection points 9 are arranged in the central and/or lower part of the side walls 4b of the cooking chamber 3.

Like the injector 23 of the two-phase generator device 20, the secondary injectors 18 may be orientable. In particular, each secondary injector 18 can be arranged oriented towards the center of the cooking chamber 3 or towards the fan blades (not depicted in the figures) housed inside the cooking chamber 3, such that a homogenous distribution of the injected steam takes place. To that end, the control means of the cooking appliance 1 control the speed of the fan such that it operates at speeds compatible with the injection of steam.

In another embodiment, each secondary injector 18 and/or each injector 23 of the two-phase generator device 20 can be arranged oriented in a fixed manner towards the center of the cooking chamber 3 or towards the fan blades.

Moreover, the steam generation system 100 comprises control means 30 and 31, configured for controlling the temperature of the fluid at all times and enabling efficient control of the steam generation system 100 and, moreover, for preventing excessive temperatures from being reached in the steam generator 10 and in the two-phase generator device 20, respectively, which may damage or deteriorate them. These control means 30 and 31 are capable of rapidly detecting temperature changes of the fluid in the steam generator 10 and in the two-phase generator device 20, respectively, which allows rapidly acting on the control of the cooking appliance 1. The control means 30 and 31 comprise a thermistor 32 and 33 housed respectively inside the steam generator 10 and the two-phase device 20, and a metal casing 34 and 35 enveloping the respective thermistor 32 and 33. Both the thermistor 32 and 33 and the respective casing 34 and 35 are housed at least partially inside the steam generator 10 and the two-phase device 20, respectively. The metal casings 34 and 35 are stainless. In a preferred embodiment, the thermistors 32 and 33 are NTC or PTC thermistors.

In the two-phase generator device 20, the thermistor 33 and the metal casing 35 are preferably arranged such that they are housed at least partially inside one of the deflectors 24 of the two-phase generator device 20. In particular, they are arranged such that they are housed in the deflector 24 located closest to the fluid inlet of the two-phase generator device 20. To that end, the deflector 24 comprises a corresponding housing 24b. The metal casing 35 is stainless. Given that in the two-phase device 20 the behavior of the water is unstable when the fluid circulates very rapidly at different temperatures and flow rates, when the control means 30 are housed inside one of the deflectors 24, said deflector 24 protects the control means 30 against very rapid and unstable temperature variations, which enables slowing down detection.

In the embodiment shown in the figures, in the steam generator 10, the casing 34 is in contact with the circulating water. The corresponding control means 30 are not arranged such that they are housed in a deflector because the rapid variation in temperatures of the fluid is not considered to be as critical as in the case of the two-phase generator device 20. In other non-depicted embodiments, the control means 30 may be housed inside a deflector 15 of the steam generator 10 for enhanced safety.

The control means 30 and 31 further comprise a non-depicted solid-state relay connected to the corresponding solenoid valve 7a and 7b and configured for rapidly switching, by electrically disconnecting the two-phase generator device 20 and/or the steam generator 10 when a temperature greater than a predetermined limit temperature is detected and reconnecting it when the temperature drops below the limit temperature.

Lastly, the steam generation system 100 comprises safety thermostats 36 and 37, arranged in the steam generator 10 and in the two-phase generator device 20, respectively, the function of which is to provide electrical and thermal protection for the cooking appliance 1. That is, should the control means 30 and 31 fail, or should control of the cooking appliance 1 be lost for various reasons, the safety thermostats 36 and 37 would cut off the power supply to the rest of the cooking appliance 1, preventing accidents or even fires. The safety thermostats 36 and 37 are arranged respectively on the outside of the respective body 14 and 21 of the steam generator 10 and of the two-phase generator device 20. In particular, they are arranged such that they are fixed close to the respective outlet of the steam generator 10 and of the two-phase generator device 20. In a preferred embodiment, the safety thermostats 36 and 37 are bi-metal thermostats.

Moreover, another aspect of the invention is a method for operating the cooking appliance 1 comprising the steam generation system 100 described above.

The operating method according to the invention comprises at least one steaming operating mode comprising a first rapid heating phase, in which the two-phase generator device 20 operates at least at about 20% of its maximum heating capacity and the steam generator 10 operates at least at about 50% of its maximum heating capacity until a setpoint temperature is reached in the cooking chamber 3, and a second stationary phase which starts when the setpoint temperature is reached in the cooking chamber 3, in which the steam generator 10 operates at least at about 20% of its maximum heating capacity, and the two-phase generator device 20 operates at least at about 25% of its maximum capacity and injects superheated steam into the cooking chamber 3.

Throughout the document, heating capacity of the two-phase generator device and/or of the steam generator is understood to be the electrical energy introduced into the two-phase device and/or into the steam generator (i.e., electric power) minus the thermal losses produced in the corresponding two-phase device and/or steam generator, said thermal losses being dynamic over time.

Moreover, in this operating mode, the corresponding two-phase generator device 20 does not inject superheated steam inside the cooking chamber 3 until the setpoint temperature has been reached inside the cooking chamber 3. In this operating mode, the steam generated in the steam generator 10 is not injected into the cooking chamber 3 but rather goes to the two-phase generator device 20.

According to this operating mode, steaming can be performed for example with intermediate-temperature moisture or with high-temperature moisture. When steaming with intermediate-temperature moisture in the first rapid heating phase, the two-phase generator device 20 operates at about 20% of its maximum heating capacity and the steam generator 10 operates at about 80% of its maximum heating capacity until the established setpoint temperature is reached, and in the second stationary phase, which starts when the setpoint temperature is reached in the cooking chamber 3, the steam generator 10 operates between about 65% and about 75% of its maximum heating capacity, and the two-phase generator device 20 operates between about 25% and about 35% of its capacity and injects superheated steam into the cooking chamber 3.

In an embodiment of steaming with intermediate-temperature moisture, the setpoint temperature of the cooking chamber 3 is less than about 125°C, said temperature preferably being between about 110°C and about 120°C. The corresponding two-phase generator device 20 does not inject superheated steam into the cooking chamber 3 until the established setpoint temperature has been reached inside the cooking chamber 3. The steam generated in the steam generator 10 is not injected into the cooking chamber 3 but rather goes to the two-phase generator device 20.

When steaming with high-temperature moisture, in the first rapid heating phase, the two-phase generator device 20 operates at about 50% of its maximum heating capacity and the steam generator 10 operates at about 50% of its maximum heating capacity until the setpoint temperature is reached, and in the second stationary phase, which starts when the setpoint temperature is reached, the steam generator 10 operates between about 20% and about 40% of its maximum heating capacity and the two-phase generator device 20 operates between about 60% and about 80% of its maximum heating capacity and injects superheated steam into the cooking chamber 3.

When steaming with high-temperature moisture, the setpoint temperature of the cooking chamber 3 is greater than the setpoint temperature of the cooking chamber 3 for steaming with intermediate-temperature moisture. In an embodiment in the case of steaming with high-temperature moisture, the setpoint temperature is less than about 140°C, said temperature preferably being between about 125°C and about 135°C. In this case, the corresponding two-phase generator device 20 does not inject superheated steam into the cooking chamber 3 until the corresponding setpoint temperature has been reached inside the cooking chamber 3. The steam generated in the steam generator 10 is not injected into the cooking chamber 3 but rather goes to the two-phase generator device 20.

The operating method according to the invention preferably comprises an additional steaming operating mode, corresponding to low-temperature steaming, wherein the steam generator 10 is in operation and the two-phase generator device 20 remains switched off, steam being injected into the cooking chamber 3 through the two-phase generator device 20 and/or through at least one secondary injector 18 connected to an additional injection point 9 of the cooking chamber 3. Superheated steam is not injected into the cooking chamber 3, with steam being supplied through the secondary injectors 18 arranged at the additional steam injection points 9 once the setpoint temperature has been reached in the cooking chamber 3. Said additional injection points 9 are arranged in the central part and/or in the lower part of the chamber 3.

In an embodiment of this additional mode, the setpoint temperature of the cooking chamber 3 is less than about 110°C, said temperature preferably being between about 100°C and about 105°C.

Regardless of the operating mode chosen by the user, prior to generating steam, the operating method comprises a partial filling step for partially filling the steam generator 10 with water, for which purpose the drive means 6 are operated for partially filling said steam generator 10, and a subsequent heating step for the purpose of heating the steam generator 10. In this heating step, the two-phase generator device 20 is not in operation and the water heated through the steam generator 10 is introduced in the chamber 3 through the injectors 18 arranged at the additional injection points 9.

In any of the operating modes, once the established setpoint temperature has been reached, the cycling of the two-phase generator device 20 and of the steam generator 10 is controlled so as to maintain said setpoint temperature through PWM controls, PID controls, or the like, depending on the cooking requirements. Electric controls allowing electrical energy to be supplied uniformly will preferably be used, such as power semiconductors or the like.

The steam generation system 100 injects superheated steam at a constant flow rate between about 10 g/minute and about 60 g/minute.

Lastly, when any of the safety thermostats 36 and 37 detects a temperature greater than 150°C, both the two-phase generator device 20 and the steam generator 10 are no longer supplied electrical power. In an embodiment, the drive means 6 are stopped so that water does not circulate. In another embodiment, the drive means 6 transition to operating in refrigeration mode such that water circulates to the steam generator 10 and/or to the two-phase generator device 20 for the maximum temperature detected to drop to a temperature regarded as being safe. At that time, the steam generation system 100 will restart the cycle that was interrupted for safety reasons. When the drive means 6 transition to operating in refrigeration mode, the control of the cooking appliance 1 can cause the solenoid valve 7a to switch such that it prevents the passage of water towards the steam generator 10, diverting the water directly towards the two-phase generator device 20 through the conduit 2.

What has been described for the steam generation system in any of its embodiments and/or configurations is also valid for the embodiments and/or configurations of the method and vice versa.

## Claims

1. Steam generation system adapted to a cooking appliance (1), the cooking appliance (1) comprising a cooking chamber (3) comprising at least one steam injection point (8) through which steam is injected into the cooking chamber (3), the steam generation system (100) comprising a water reservoir (5) and a steam generator (10) communicated with the water reservoir (5) and configured for heating water arriving from the water reservoir (5), **characterized in that** it comprises at least a two-phase generator device (20) arranged each two-phase generator device (20) at the corresponding steam injection point (8), the two-phase generator device (20) being communicated with the steam generator (10) and configured for generating superheated steam and injecting it into the cooking chamber (3) through the corresponding steam injection point (8), from the hot water or steam generated in the steam generator (10), the two-phase generator device (20) being removable.

2. Steam generation system according to the preceding claim, comprising a plurality of two-phase generator devices (20) each of them connectable to a corresponding injection point (8) of the cooking chamber (3).

3. Steam generation system according to any of the preceding claims, wherein the two-phase generator device (20) is arranged such that it is connected with the steam generator (10) by gravity.

4. Steam generation system according to any of the preceding claims, comprising drive means (6) adapted to drive water from the reservoir (5) to the steam generator (10) and/or to the two-phase generator device (20), the two-phase generator device (20) being communicated with the drive means (6) through the steam generator (10).

5. Steam generation system according to any of the preceding claims, wherein the two-phase generator device (20) comprises a body (22), heating means (21) housed in the body (22) and configured for heating the inflow fluid generating superheated steam, and an injector (23) configured for injecting the superheated steam into the cooking chamber (3) through the corresponding injection point (8), the injector (23) preferably being orientable with respect to a support configured for being connected to the steam injection point (8).

6. Steam generation system according to claim 5, wherein the heating means (21) of the two-phase generator device (20) and/or the heating means (14) of the steam generator (10) comprise at least one resistive element, preferably a thick-film resistor.

7. Steam generation system according to claim 6, wherein the heating means (21) of the two-phase generator device (20) are arranged such that they are fixed inside the body (22) of the two-phase generator device (20) and/or the heating means (14) of the steam generator (10) are arranged such that they are fixed inside a body (11) of the steam generator (10).

8. Steam generation system according to any of the preceding claims, wherein the two-phase generator device (20) comprises at least one deflector (24) housed inside the two-phase generator device (20) and configured for diverting inflow water in the two-phase generator device (20), and/or the steam generator (10) comprises at least one deflector (15) housed inside the steam generator (10) and configured for diverting inflow water in the steam generator (10).

9. Steam generation system according to claim 8, comprising temperature control means (31) comprising a thermistor (33) and a metal casing (35) enveloping said thermistor (33), the thermistor (33) and the metal casing (35) being housed at least partially inside the deflector (24) of the two-phase generator device (20).

10. Cooking appliance comprising a cooking chamber (3) comprising at least one steam injection point (8) through which steam is injected into the cooking chamber (3), and a steam generation system (100) according to any of the preceding claims, communicated with the steam injection point (8).

11. Operating method for the cooking appliance (1) comprising a cooking chamber (3) comprising at least a steam injection point (8) through which steam is injected into the cooking chamber (3), and a steam generation system (100) according to any of the claims 1 to 9 communicated with the corresponding steam injection point (8), **characterized in that** it comprises at least one steaming operating mode comprising a first rapid heating phase, in which the two-phase generator device (20) of the steam generation system (100) operates at least at about 20% of its maximum heating capacity and the steam generator (10) of the steam generation system (100) operates at least at about 50% of its maximum heating capacity until a setpoint temperature is reached in the cooking chamber, and a second stationary phase which starts when the setpoint temperature is reached in the cooking chamber (3), in which the steam generator (10) operates at least at about 20% of its maximum heating capacity, and the two-phase generator device (20) operates at least at about 25% of its maximum capacity and injects superheated steam into the cooking chamber (3).

12. Operating method according to claim 11, wherein in the first rapid heating phase, the two-phase generator device (20) operates at about 20% of its maximum heating capacity and the steam generator (10) operates at about 80% of its maximum heating capacity until the setpoint temperature is reached, and in the second stationary phase which starts when the setpoint temperature is reached, the steam generator (10) operates between about 65% and about 75% of its maximum heating capacity, and the two-phase generator device (20) operates between about 25% and about 35% of its maximum capacity and injects superheated steam into the cooking chamber (3).

13. Operating method according to claim 11 or 12, comprising an additional steaming operating mode wherein in the first rapid heating phase, the two-phase generator device (20) operates at about 50% of its maximum heating capacity and the steam generator (10) operates at about 50% of its maximum heating capacity until the setpoint temperature is reached, and in the second stationary phase which starts when the setpoint temperature is reached, the steam generator (10) operates between about 20% and about 40% of its maximum heating capacity and the two-phase generator device (20) operates between about 60% and about 80% of its maximum capacity and injects superheated steam into the cooking chamber (3).

14. Operating method according to any of claims 11 to 13, comprising an additional steaming operating mode with a setpoint temperature of the cooking chamber (3) lower than a predetermined temperature, in which the steam generator (10) is in operation and the two-phase generator device (20) remains switched off, steam being injected into the cooking chamber (3) through the two-phase generator device (20) and/or through at least one injector (18) connected to an additional injection point (9) of the cooking chamber (3).

## Patentansprüche

1. Dampferzeugungssystem, welches an ein Gargerät (1) angepasst ist, wobei das Gargerät (1) einen Garraum (3) umfasst, welcher mindestens eine Dampfeinspritzstelle (8) umfasst, durch welche Dampf in den Garraum (3) eingespritzt wird, wobei das Dampferzeugungssystem (100) einen Wassertank (5) und einen Dampferzeuger (10), welcher mit dem Wassertank (5) in Verbindung steht und dazu ausgebildet ist, das vom Wassertank (5) kommende Wasser zu heizen, umfasst, **dadurch gekennzeichnet, dass** es mindestens eine Zweiphasenerzeugungsvorrichtung (20) umfasst, wobei jede Zweiphasenerzeugungsvorrichtung (20) an einer entsprechenden Dampfeinspritzstelle (8) angeordnet ist, wobei die Zweiphasenerzeugungsvorrichtung (20) mit dem Dampferzeuger (10) in Verbindung steht und dazu ausgebildet ist, überhitzten Dampf zu erzeugen und ihn in den Garraum (3) über die entsprechende Dampfeinspritzstelle (8) einzuspritzen, aus dem heißen Wasser oder im Dampferzeuger (10) erzeugten Dampf, wobei die Zweiphasenerzeugungsvorrichtung (20) lösbar ist.

2. Dampferzeugungssystem nach dem vorhergehenden Anspruch, umfassend eine Vielzahl von Zweiphasenerzeugungsvorrichtungen (20), wobei jede davon an eine entsprechende Einspritzstelle (8) des Garraums (3) angeschlossen werden kann.

3. Dampferzeugungssystem nach einem der vorhergehenden Ansprüche, wobei die Zweiphasenerzeugungsvorrichtung (20) so angeordnet ist, dass sie mit dem Dampferzeuger (10) mittels Schwerkraft angeschlossen ist.

4. Dampferzeugungssystem nach einem der vorhergehenden Ansprüche, umfassend Antriebsmittel (6), welche dazu angepasst sind, Wasser vom Tank (5) zum Dampferzeuger (10) und/oder zur Zweiphasenerzeugungsvorrichtung (20) anzutreiben, wobei die Zweiphasenerzeugungsvorrichtung (20) mit den Antriebsmitteln (6) über den Dampferzeuger (10) in Verbindung steht.

5. Dampferzeugungssystem nach einem der vorhergehenden Ansprüche, wobei die Zweiphasenerzeugungsvorrichtung (20) einen Körper (22), Heizmittel (21), welche im Körper (22) aufgenommen sind und dazu ausgebildet sind, das einströmende Fluid, welches den überhitzten Dampf erzeugt, zu heizen, und einen Einspritzer (23), welcher dazu ausgebildet ist, den überhitzten Dampf in den Garraum (3) über die entsprechende Einspritzstelle (8) einzuspritzen, umfasst, wobei der Einspritzer (23) vorzugsweise in Bezug auf eine Stütze, welche dazu ausgebildet ist, an die Dampfeinspritzstelle (8) angeschlossen zu werden, ausgerichtet werden kann.

6. Dampferzeugungssystem nach Anspruch 5, wobei die Heizmittel (21) der Zweiphasenerzeugungsvorrichtung (20) und/oder die Heizmittel (14) des Dampferzeugers (10) mindestens ein Widerstandselement, vorzugsweise einen Dickschichtwiderstand, umfassen.

7. Dampferzeugungssystem nach Anspruch 6, wobei die Heizmittel (21) der Zweiphasenerzeugungsvorrichtung (20) so angeordnet sind, dass sie innerhalb des Körpers (22) der Zweiphasenerzeugungsvorrichtung (20) fixiert sind und/oder die Heizmittel (14) des Dampferzeugers (10) so angeordnet sind, dass sie innerhalb eines Körpers (11) des Dampferzeugers (10) fixiert sind.

8. Dampferzeugungssystem nach einem der vorhergehenden Ansprüche, wobei die Zweiphasenerzeugungsvorrichtung (20) mindestens einen Ablenker (24) umfasst, welcher innerhalb der Zweiphasenerzeugungsvorrichtung (20) aufgenommen ist und dazu ausgebildet ist, das einströmende Wasser in die Zweiphasenerzeugungsvorrichtung (20) umzuleiten, und/oder der Dampferzeuger (10) mindestens einen Ablenker (15) umfasst, welcher innerhalb des Dampferzeugers (10) aufgenommen ist und dazu ausgebildet ist, das einströmende Wasser in den Dampferzeuger (10) umzuleiten.

9. Dampferzeugungssystem nach Anspruch 8, umfassend Temperaturkontrollmittel (31), welche einen Thermistor (33) und ein Metallgehäuse (35), welches den genannten Thermistor (33) umhüllt, umfassen, wobei der Thermistor (33) und das Metallgehäuse (35) mindestens teilweise innerhalb des Ablenkers (24) der Zweiphasenerzeugungsvorrichtung (20) aufgenommen ist.

10. Gargerät umfassend einen Garraum (3), welcher mindestens eine Dampfeinspritzstelle (8), über welche Dampf in den Garraum (3) eingespritzt wird, und einen Dampferzeugungssystem (100) nach einem der vorhergehenden Ansprüche, welches mit der Dampfeinspritzstelle (8) in Verbindung steht, umfasst.

11. Betriebsverfahren für das Gargerät (1) umfassend einen Garraum (3), welcher mindestens eine Dampfeinspritzstelle (8), über welche Dampf in den Garraum (3) eingespritzt wird, und ein Dampferzeugungssystem (100) nach einem der Ansprüche 1 bis 9, welches mit der entsprechenden Dampfeinspritzstelle (8) in Verbindung steht, umfasst, **dadurch gekennzeichnet, dass** es mindestens einen dampfenden Betriebsmodus umfasst, welcher eine erste Schnellheizphase, in welcher die Zweiphasenerzeugungsvorrichtung (20) des Dampferzeugungssystems (100) mindestens bei ungefähr 20% dessen maximalen Heizleistung in Betrieb ist und der Dampferzeuger (10) des Dampferzeugungssystems (100) mindestens bei ungefähr 50% dessen maximalen Heizleistung in Betrieb ist bis eine Soll-Temperatur im Garraum erreicht wird, und eine zweite stationäre Phase, welche anfängt, wenn die Soll-Temperatur um Garraum (3) erreicht wird, in welcher der Dampferzeuger (10) mindestens bei ungefähr 20% dessen maximalen Heizleistung in Betrieb ist, und die Zweiphasenerzeugungsvorrichtung (20) mindestens bei ungefähr 25% dessen maximalen Leistung in Betrieb ist und überhitzten Dampf in den Garraum (3) einspritzt, umfasst.

12. Betriebsverfahren nach Anspruch 11, wobei, in der ersten Schnellheizphase, die Zweiphasenerzeugungsvorrichtung (20) bei ungefähr 20% dessen maximalen Heizleistung in Betrieb ist und der Dampferzeuger (10) bei ungefähr 80% dessen maximalen Heizleistung in Betrieb ist bis die Soll-Temperatur erreicht wird, und in der zweiten stationären Phase, welche anfängt, wenn die Soll-Temperatur erreicht wird, der Dampferzeuger (10) zwischen ungefähr 65% und ungefähr 75% dessen maximalen Heizleistung in Betrieb ist, und die Zweiphasenerzeugungsvorrichtung (20) zwischen ungefähr 25% und ungefähr 35% dessen maximalen Leistung in Betrieb ist und überhitzten Dampf in den Garraum (3) einspritzt.

13. Betriebsverfahren nach Anspruch 11 oder 12, umfassend einen zusätzlichen dampfenden Betriebsmodus, wobei, in der ersten Schnellheizphase, die Zweiphasenerzeugungsvorrichtung (20) bei ungefähr 50% dessen maximalen Heizleistung in Betrieb ist und der Dampferzeuger (10) bei ungefähr 50% dessen maximalen Heizleistung in Betrieb ist bis die Soll-Temperatur erreicht wird, und in der zweiten stationären Phase, welche anfängt, wenn die Soll-Temperatur erreicht wird, der Dampferzeuger (10) zwischen ungefähr 20% und ungefähr 40% dessen maximalen Heizleistung in Betrieb ist und die Zweiphasenerzeugungsvorrichtung (20) zwischen ungefähr 60% und ungefähr 80% dessen maximalen Leistung in Betrieb ist und überhitzten Dampf in den Garraum (3) einspritzt.

14. Betriebsverfahren nach einem der Ansprüche 11 bis 13, umfassend einen zusätzlichen dampfenden Betriebsmodus mit einer Soll-Temperatur des Garraums (3) niedriger als eine vorbestimmten Temperatur, in welcher der Dampferzeuger (10) in Betrieb ist und die Zweiphasenerzeugungsvorrichtung (20) ausgeschaltet bleibt, wobei Dampf in den Garraum (3) über die Zweiphasenerzeugungsvorrichtung (20) und/oder über mindestens einen Einspritzer (18), welcher an einer zusätzlichen Einspritzstelle (9) des Garraums (3) angeschlossen ist, eingespritzt wird.

## Revendications

1. Système de production de vapeur adapté pour un appareil de cuisson (1), l'appareil de cuisson (1) comprenant une chambre de cuisson (3) comprenant au moins un point d'injection de vapeur (8) à travers lequel de la vapeur est injectée dans la chambre de cuisson (3), le système de production de vapeur (100) comprenant un réservoir d'eau (5) et un générateur de vapeur (10) en communication avec le réservoir d'eau (5) et configuré pour chauffer de l'eau arrivant à partir du réservoir d'eau (5), **caractérisé en ce qu'**il comprend au moins un dispositif générateur en deux phases (20), chaque dispositif générateur en deux phases (20) étant disposé dans le point d'injection de vapeur (8) correspondant, le dispositif générateur en deux phases (20) étant en communication avec le générateur de vapeur (10) et configuré pour générer de la vapeur surchauffée et l'injecter dans la chambre de cuisson (3) à travers le point d'injection de vapeur (8) correspondant, à partir de l'eau chaude ou de la vapeur générée dans le générateur de vapeur (10), le dispositif générateur en deux phases (20) étant amovible.

2. Système de production de vapeur selon la revendication précédente, comprenant une pluralité de dispositifs générateurs en deux phases (20), chacun d'entre eux pouvant être relié à un point d'injection (8) correspondant de la chambre de cuisson (3).

3. Système de production de vapeur selon l'une quelconque des revendications précédentes, dans lequel le dispositif générateur en deux phases (20) est disposé de sorte qu'il est relié au générateur de vapeur (10) par gravité.

4. Système de production de vapeur selon l'une quelconque des revendications précédentes, comprenant des moyens d'entraînement (6) adaptés pour entraîner de l'eau à partir du réservoir (5) jusqu'au générateur de vapeur (10) et/ou jusqu'au dispositif générateur en deux phases (20), le dispositif générateur en deux phases (20) étant en communication avec les moyens d'entraînement (6) à travers le générateur de vapeur (10).

5. Système de production de vapeur selon l'une quelconque des revendications précédentes, dans lequel le dispositif générateur en deux phases (20) comprend un corps (22), des moyens de chauffage (21) logés dans le corps (22) et configurés pour chauffer le fluide entrant générant de la vapeur surchauffée, et un injecteur (23) configuré pour injecter la vapeur surchauffée dans la chambre de cuisson (3) à travers le point d'injection (8) correspondant, l'injecteur (23) étant de préférence orientable par rapport à un support configuré pour être relié au point d'injection de vapeur (8).

6. Système de production de vapeur selon la revendication 5, dans lequel les moyens de chauffage (21) du dispositif générateur en deux phases (20) et/ou les moyens de chauffage (14) du générateur de vapeur (10) comprennent au moins un élément résistif, de préférence une résistance à couche épaisse.

7. Système de production de vapeur selon la revendication 6, dans lequel les moyens de chauffage (21) du dispositif générateur en deux phases (20) sont disposés de sorte que qu'ils sont fixés à l'intérieur du corps (22) du dispositif générateur en deux phases (20) et/ou les moyens de chauffage (14) du générateur de vapeur (10) sont disposés de sorte qu'ils sont fixés à l'intérieur d'un corps (11) du générateur de vapeur (10).

8. Système de production de vapeur selon l'une quelconque des revendications précédentes, dans lequel le dispositif générateur en deux phases (20) comprend au moins un déflecteur (24) logé à l'intérieur du dispositif générateur en deux phases (20) et configuré pour dévier l'eau entrante dans le dispositif générateur en deux phases (20), et/ou le générateur de vapeur (10) comprend au moins un déflecteur (15) logé à l'intérieur du générateur de vapeur (10) et configuré pour dévier l'eau entrante dans le générateur de vapeur (10).

9. Système de production de vapeur selon la revendication 8, comprenant des moyens de contrôle de température (31) comprenant une thermistance (33) et un boîtier métallique (35) enveloppant ladite thermistance (33), la thermistance (33) et le boîtier métallique (35) étant logés au moins partiellement à l'intérieur du déflecteur (24) du dispositif générateur en deux phases (20).

10. Appareil de cuisson comprenant une chambre de cuisson (3) comprenant au moins un point d'injection de vapeur (8) à travers lequel de la vapeur est injectée dans la chambre de cuisson (3), et un système de production de vapeur (100) selon l'une quelconque des revendications précédentes, en communication avec le point d'injection de vapeur (8).

11. Procédé de fonctionnement pour l'appareil de cuisson (1) comprenant une chambre de cuisson (3) comprenant au moins un point d'injection de vapeur (8) à travers lequel de la vapeur est injectée dans la chambre de cuisson (3), et un système de production de vapeur (100) selon l'une quelconque des revendications 1 à 9 en communication avec le point d'injection de vapeur (8) correspondant, **caractérisé en ce qu'**il comprend au moins un mode de fonctionnement de cuisson à la vapeur comprenant une première phase de chauffage rapide, dans laquelle le dispositif générateur en deux phases (20) du système de production de vapeur (100) fonctionne à au moins environ 20% de sa capacité de chauffage maximale et le générateur de vapeur (10) du système de production de vapeur (100) fonctionne à au moins environ 50% de sa capacité de chauffage maximale jusqu'à atteindre une température de consigne dans la chambre de cuisson, et une deuxième phase stationnaire qui commence lorsque la température de consigne est atteinte dans la chambre de cuisson (3), dans laquelle le générateur de vapeur (10) fonctionne à au moins environ 20% de sa capacité de chauffage maximale, et le dispositif générateur en deux phases (20) fonctionne à au moins environ 25% de sa capacité maximale et injecte de la vapeur surchauffée dans la chambre de cuisson (3).

12. Procédé de fonctionnement selon la revendication 11, dans lequel, dans la première phase de chauffage rapide, le dispositif générateur en deux phases (20) fonctionne à environ 20% de sa capacité de chauffage maximale et le générateur de vapeur (10) fonctionne à environ 80% de sa capacité de chauffage maximale jusqu'à atteindre la température de consigne, et dans la deuxième phase stationnaire qui commence lorsque la température de consigne est atteinte, le générateur de vapeur (10) fonctionne à entre environ 65% et environ 75% de sa capacité de chauffage maximale, et le dispositif générateur en deux phases (20) fonctionne à entre environ 25% et environ 35% de sa capacité maximale et injecte de la vapeur surchauffée dans la chambre de cuisson (3).

13. Procédé de fonctionnement selon la revendication 11 ou 12, comprenant un mode de fonctionnement de cuisson à la vapeur additionnel dans lequel, dans la première phase de chauffage rapide, le dispositif générateur en deux phases (20) fonctionne à environ 50% de sa capacité de chauffage maximale et le générateur de vapeur (10) fonctionne à environ 50% de sa capacité de chauffage maximale jusqu'à atteindre la température de consigne, et dans la deuxième phase stationnaire qui commence lorsque la température de consigne est atteinte, le générateur de vapeur (10) fonctionne à entre environ 20% et environ 40% de sa capacité de chauffage maximale et le dispositif générateur en deux phases (20) fonctionne à entre environ 60% et environ 80% de sa capacité maximale et injecte de la vapeur surchauffée dans la chambre de cuisson (3).

14. Procédé de fonctionnement selon l'une quelconque des revendications 11 à 13, comprenant un mode de fonctionnement de cuisson à la vapeur additionnel avec une température de consigne de la chambre de cuisson (3) inférieure à une température prédéterminée, dans lequel le générateur de vapeur (10) est en fonctionnement et le dispositif générateur en deux phases (20) reste éteint off, de la vapeur étant injectée dans la chambre de cuisson (3) à travers le dispositif générateur en deux phases (20) et/ou à travers au moins un injecteur (18) relié à un point d'injection additionnel (9) de la chambre de cuisson (3).
